# EUROPEAN PATENT SPECIFICATION

(11) **EP 2 616 314 B1**
(45) Date of publication and mention of the grant of the patent: **25.11.2015**
(21) Application number: 10774290.0
(22) Date of filing: 16.09.2010
(51) Int. Cl.: B62J 1/00, B62J 1/22, B29C 63/16

(54) **METHOD FOR MANUFACTURING SADDLES AND THE LIKE**
VERFAHREN ZUR HERSTELLUNG VON SATTELN UND DERGLEICHEN
PROCÉDÉ DE FABRICATION DE SELLES ET ARTICLES DU MÊME GENRE

(43) Date of publication of application: 24.07.2013
(73) Proprietor: Cassani, Luca, 31030 Castelcucco (IT)
(72) Inventor: Cassani, Luca, 31030 Castelcucco (IT)
(74) Representative: Modiano, Micaela Nadia
(86) International application number: PCT/IT2010/000393
(87) International publication number: WO 2012/035564

(56) References cited:
- EP-A2- 0 951 985
- WO-A1-98/06619
- WO-A1-2008/099364
- JP-A- 60 192 617
- JP-A- 62 080 025
- JP-A- S51 135 984
- US-A- 4 447 282

## Description

### Technical field

The present invention relates to a method for manufacturing saddles : the expression "saddles" is to be understood as referencing all types of saddle.

By way of example, mention is made of saddles for cycles (including tricycles, rickshaws, tandems and the like), for motorcycles (including three-wheel trucks and special vehicles even for sports use) and for vehicles of any kind, such as snowmobiles, water scooters, watercraft (consider the fighting chairs used in open sea fishing and/or the driving consoles of certain types of boat), quadricycles and the like.

However, the possibility is not excluded to apply the method according to the invention for manufacturing saddles for horse riding and/or saddles for training machines (such as the apparatuses and benches used in gyms and in sports centers).

### Background art

All saddles of the known type are constituted generally by a shell, generally made of substantially rigid material (which has structural purposes), optionally covered with appropriate layers of hide and/or fabric and/or polymer sheets in order to improve their appearance and comfort.

It is stressed that a lamina made of expanded material can be interposed between the shell and the covering in order to make the saddle softer.

The manufacture of a saddle that conforms to the described characteristics provides for the arrangement of the covering layer over the shell, its tensioning for optimal covering of the shell itself and the locking of its edges, after folding them under the edge of the shell, toward its lower surface, by means of staples or rivets (generically, a manual process of tacking or seaming).

Since this is a manual method, it is clear that the quality of the finished product will depend on the skill of the operator and it will be therefore very difficult to ensure a constant quality standard.

At the same time, if yielding materials are used (such as hide, imitation leather and some types of fabric), the stability of the covering of the finished product depends on the tension imposed by the operator during assembly: obviously, an incorrect tensioning of the material will cause the formation of creases on the saddle after a certain number of hours of use.

It must be stressed, furthermore, that saddles provided according to this type of manual method require particular care during maintenance: washing, for example, cannot be performed by using high-pressure washers or particularly powerful jets of water, because they might lift a flap of the covering material, forming a triggering point for the complete separation thereof.

It is not irrelevant, moreover, that saddles provided by means of known types of method can be covered effectively and with quality only if they have a substantially regular shape: any irregularity causes a significant increase in covering difficulty, which leads to an increase in costs that is often not justifiable from the point of view of the buyer.

WO 98/06619 A1discloses a mountain bike seat comprising a thin flexible shell made of injection molded plastic with a padding formed thereon or attached thereto by adhesive in a conventional manner.

WO 2008/099364 discloses a bicycle saddle comprising a load-bearing shell with a cover element, the shell being made from a thermoformed molded composite material composed of a polymeric matrix and a fiber containing reinforcement, whith the cover element attached to the shell by means of nuts or rivets.

JP 60 192617 A is considered to represent the closest prior art and discloses a method for attaching a decorative sheet to a base plate. A lower hot air supply device provides for heating and upward swelling of the decorative sheet above the base plate, and an upper push member chamber with an elastic sheet is closed over the swollen decorative sheet. Heated silicone oil fills the upper chamber while the lower chamber is vacuumized to attach the sheet over the base with the interposition of adhesive.

### Disclosure of the invention

The aim of the present invention is to solve the problems described above, by proposing a method for manufacturing saddles, of the industrialized type in order to ensure the constancy of the characteristics of the finished products obtained therewith.

Within this aim, an object of the invention is to propose a method for manufacturing saddles that ensures optimal strength and stability of the finished products even if they are subjected to onerous and prolonged use.

Another object of the invention is to propose a method for manufacturing saddles that is predominantly automated in order to reduce production costs.

Another object of the present invention is to provide a method for manufacturing saddles that is relatively easy to provide and safe in use.

In accordance with the invention, there is provided a method for manufacturing saddles, as defined in the appended claims.

### Brief description of the drawings

Further characteristics and advantages of the invention will become better apparent from the detailed description that follows of a preferred but not exclusive embodiment of the method for manufacturing saddles according to the invention, illustrated by way of non-limiting example in the accompanying drawings, wherein:

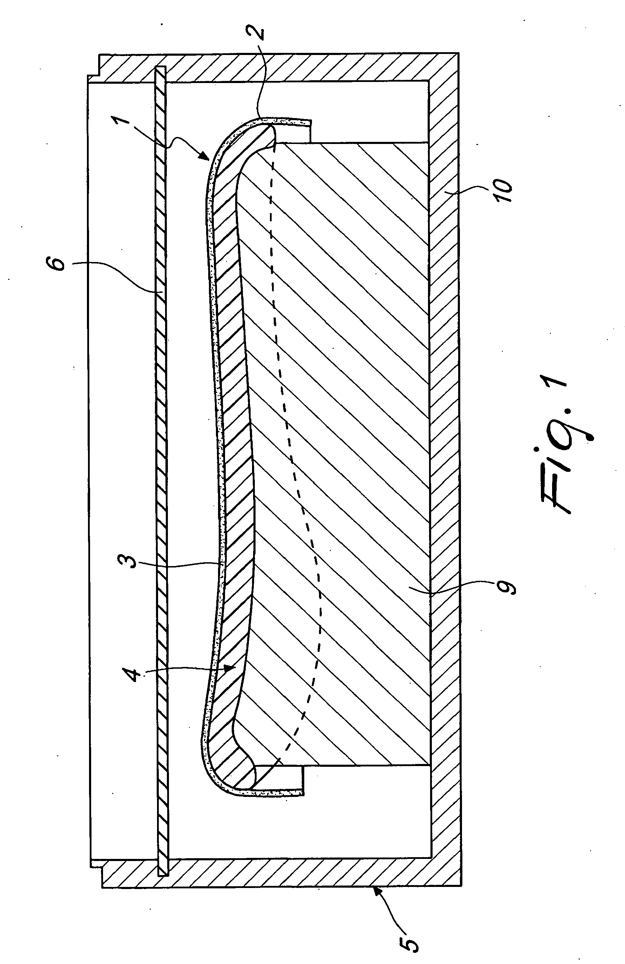

Figure 1 is a schematic view of an initial step of the method for manufacturing saddles according to the invention;

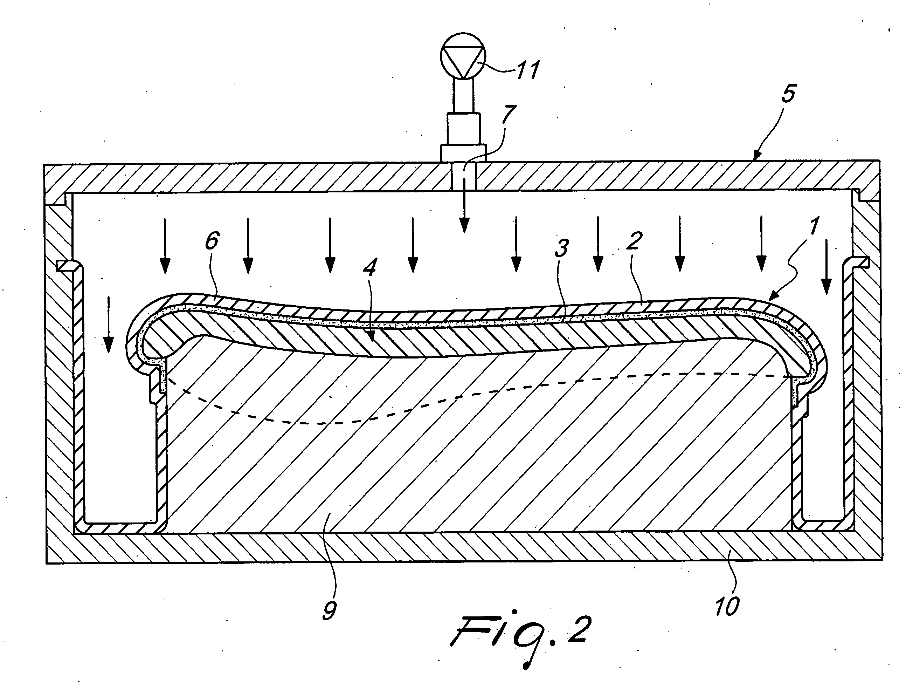

Figure 2 is a schematic view of an advanced step of the method for manufacturing saddles according to the invention;

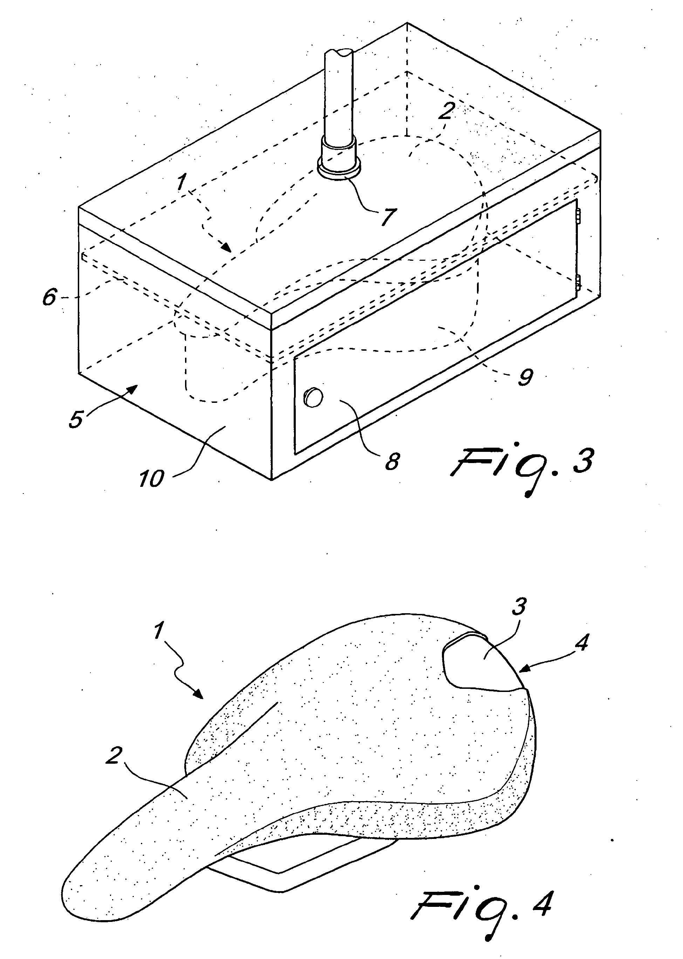

Figure 3 is a schematic view of a chamber for manufacturing saddles for using the method according to the invention;
Figure 4 is a schematic view of a saddle obtained with the method according to the invention.

### Ways of carrying out the invention

With reference to the figures, a saddle provided by using the method according to the invention is generally designated by the reference numeral 1.

The method according to the invention consists in performing a series of consecutive steps.

A first step a) provides for the deposition/placement (the most correct term is juxtaposition) of at least one covering sheet 2 on the upper face 3 of a hull 4, also known as shell, of a saddle.

The juxtaposition occurs after the interposition, preferably with an even distribution, of an adhesive substance between the face 3 and the surface of the sheet 2 in contact with it.

A second step b) is instead performed inside a hermetic chamber 5, which is provided with an elastically deformable membrane 6.

The membrane 6 is arranged downstream of a nozzle 7 adapted to deliver pressurized fluid.

Step b) requires the arrangement of the hull 4, surmounted by the respective covering sheet 2, inside the chamber 5 (which for this purpose comprises an access door 8): the hull 4 and the covering 2 are arranged substantially below the membrane 6, preferably resting on a respective support.

In a third step c) it is necessary to close the chamber 5 (by closing the door 8 hermetically), isolating it from the outside environment.

A fourth step d) requires the introduction of pressurized fluid until a pressure is reached through the nozzle 7, upstream to the membrane 6, which is comprised between 0.1 bar and 20 bar, i.e., comprised (by using the units of measurement used in the International System) between 10 KPa and 2 MPa.

During a fifth step e) it is necessary to maintain the pressure value indicated in step d) inside the chamber 5 for a time comprised between 1 second and 10 minutes.

A sixth step f) requires the removal of the pressurized fluid, the opening of the chamber 5 and the removal of the component constituted by the hull 4, stably covered with the covering sheet 2: the hull 4 and the covering 2 are, already at this point, stably cohesive because the adhesive (subjected to the indicated pressure) has already had the opportunity to cross-link effectively.

A seventh and last step g) consists in trimming, by removing them by means of a sharp tool, the edges of the sheet 2 that protrude from the contour of the hull 4, obtaining the finished saddle 1.

According to a possible applicative variation of the method according to the invention, the first step a) provides for subjecting to a preventive treatment at least one surface chosen between the upper face 3 of the hull 4 and the surface of the covering sheet 2.

The preventive treatment consists in arranging a grip promoting agent, usually known as "primer", on such at least one surface, in order to facilitate the correct and stable adhesion thereon of the adhesive substance.

According to one particular embodiment of unquestionable interest in practice and in application, the adhesive substance is a polychloroprene, a type of polymer also known as "neoprene".

Moreover, it is of noteworthy importance, in order to optimize the efficiency and production performance of the method according to the invention, that the pressurized fluid introduced in the chamber 5 has a temperature comprised between 10°C and 100°C: the use of a specific temperature for the pressurized fluid introduced in the chamber 5 may contribute to accelerate and increase the strength of the bond, in particular because it facilitates the fast and complete evaporation of the solvents present within the adhesive substance.

In order to improve the aesthetic appearance of the saddle 1 and make it conform to particular production requirements, at the end of the seventh step g) it may be convenient to subject the covering sheet 2, appropriately trimmed, to at least one treatment chosen between coloring and spraying with waxy substances.

While the coloring has a mainly esthetic function, the surface treatment with waxes (in particular with sheets 2 made of hide and similar materials) ensures greater resistance to external agents and makes the material waterproof.

According to a particular application of the method according to the invention that has proved itself to be productively efficient and stable, the pressure of the fluid introduced in the chamber 5 during step d) is preferably comprised between 2 and 8 bar, i.e., comprised between 200 KPa and 800 KPa.

In this case it must be noted that the time interval during which the pressurized fluid must persist inside the chamber 5 should be comprised preferably between 10 seconds and 20 seconds.

Also, the fact should not be overlooked that according to this particular applicative variation of the method the temperature of the pressurized fluid introduced in the chamber 5 must be comprised preferably between 20°C and 40 °C.

In order to provide a saddle 1 that is particularly comfortable and thus has a soft resting surface, during step a) it is appropriate to also interpose a second laminar element made of expanded material. Optionally, the second sheet may be also integrated in the first sheet 2: the use of multilayer sheets 2 in fact might speed up the application of the method according to the invention, because a single multilayer sheet 2 will have already the characteristics required of the finished product.

In this case (covering with multilayer sheet 2) it might be preferable to use sheets 2 constituted by sheets made of a material of the type of hide, imitation leather, fabric, polymers and the like between which a layer made of expanded material is interposed which has the function of increasing softness.

According to this embodiment and if the various sheets are superimposed at the time of application of the method (i.e., one does not have a multilayer sheet 2), the adhesive substance must be interposed and distributed between the face 3 of the hull 4 and a first surface of the laminar element made of expanded material in contact with it and between the surface of the covering sheet 2 and the other surface of the laminar element made of expanded material in contact with it.

In practice, the adhesive substance (and also the optional pretreatments with grip promoting agents and primers) must be distributed on all the facing surfaces of different sheets, as well as on the face 3 of the hull 4.

The pressurized fluid may be simple air, but in more demanding applications the use of other different fluids, such as also oils, water, specific gas mixtures and specific liquid mixtures, is not excluded.

The chamber 5 is constituted by a hermetic box-like body 10, which is provided with at least one opening, which can be closed hermetically (by means of the door 8), for inserting semi-finished products inside it.

The box-like body 10 comprises the elastically deformable membrane 6 arranged proximate to its upper face.

The upper face, in turn, is provided with a seat for the hermetic accommodation of the nozzle 7 for introducing pressurized fluid, which is connected to a respective supply circuit (generally connected to a pump or compressor 11).

According to a particular embodiment of unquestionable interest in practice and in application, the supply circuit is a pneumatic circuit (in this case it will comprise, therefore, a compressor 11).

It is specified that the membrane 6 is made of a material of the type of an elastomer, which is therefore adapted to undergo high deformations in the elastic range: the introduction of pressurized fluid thus deforms the membrane 6 until it mates with the hull 4 (compressing the covering sheet 2 on the face 3 thereof).

This condition of mutual high pressure facilitates the perfect and steady adhesive bonding of the surfaces in contact.

The saddle 1 comprises a hull 4, also known as shell, which is substantially rigid and is covered by means of at least one covering sheet 2.

In particular, the at least one covering sheet 2 is stably glued, even with the interposition of further shock-absorbing layers, to the hull 4 up to the perimetric edges of the hull 4. There are no rivets, staples made of metal (or of another kind) and fixing staples in order to couple the sheet 2 stably to the hull 4; the perfect cohesion of the sheet 2 to the hull 4 is entrusted solely to the adhesive substance.

It is noted that according to possible embodiments that are particularly interesting from a practical and applicative point of view, the hull 4 is made preferably of a material chosen among metallic materials, composite materials, polymeric materials and wood.

Likewise, the at least one covering sheet 2 is preferably made of a material chosen among hide, fabric, polymeric materials, rubber and natural fibers.

It is noted that the method according to the invention, particularly when it is applied by using a chamber 5 of the type of the one described previously, is particularly suitable for providing saddles for cycles and motorcycles, saddles for any means of transport (snowmobiles, water scooters, wheelhouses for watercraft and others), saddles for horse riding; however, the use of this method for manufacturing saddles for gym machines, training benches and the like is not excluded.

Advantageously, the method for manufacturing saddles according to the invention solves the typical problems of this type of products, allowing a production of the industrialized type (no longer manual, as for traditional saddles) in order to ensure constancy of the characteristics of the finished products obtained therewith.

Conveniently, the method for manufacturing saddles ensures optimal resistance and stability of the finished products even if they are subjected to onerous use extended over time: nailed or sewn coverings may easily be damaged by use and by washing and maintenance operations.

Positively, the method according to the invention is of the predominantly automated type, reducing in practice the production costs.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for manufacturing saddles, which comprises the steps of:
a) arranging at least one covering sheet (2) on the upper face (3) of a hull (4), also called shell, of a saddle (1), interposing between said face (3) and the surface of the sheet (2) in contact therewith an adhesive substance;
b) inside a hermetic chamber (5) constituted by a hermetic box-like body (10) provided with an opening which is closeable hermetically by means of an access door (8), and provided with an elastically deformable membrane (6), arranged downstream of a nozzle (7) for dispensing pressurized pneumatic fluid, arranging the hull (4), surmounted by said covering sheet (2), substantially below said membrane (6) by inserting the hull (4) surmounted by the covering sheet (2) through said opening in said box-like body (10);
c) closing the chamber (5) by closing the access door (8) hermetically, isolating it from the outside environment;
d) introducing the pressurized pneumatic fluid until a pressure is reached, upstream of said membrane (6), which is comprised between 0.1 and 20 bar, i.e., comprised between 10 KPa and 2 MPa;
e) maintaining the pressure value indicated in step d) inside the chamber (5) for a time comprised between 1 second and 10 minutes;
f) removing the pressurized pneumatic fluid, opening the chamber (5) and removing the component constituted by the hull (4) stably covered with said covering sheet (2);
g) trimming the edges of said sheet (2) that protrude from the contour of said hull (4) by removing them by means of a sharp tool, obtaining the finished saddle (1).

2. The method according to claim 1, which consists in, during said step a), exposing to a preventive treatment at least one surface chosen between the upper face (3) of the hull (4) and the surface of the covering sheet (2), said preventive treatment comprising the placement of a grip promoting agent, usually termed primer, on said at least one surface, in order to facilitate the correct and stable adhesion of said adhesive substance.

3. The method according to claim 1, **characterized in that** said adhesive substance is a polychloroprene, a type of polymers also known as neoprene.

4. The method according to claim 1, **characterized in that** the pressurized pneumatic fluid introduced in said chamber (5) has a temperature comprised between 10°C and 100°C.

5. The method according to claim 1, which consists in, during step g), subjecting the covering sheet (2), appropriately trimmed, to at least one treatment between coloring and spraying with waxy substances.

6. The method according to claim 1, **characterized in that** the pressure of the pressurized pneumatic fluid introduced in said chamber (5) during step d) is preferably comprised between 2 and 8 bar, i.e., comprised between 200 KPa and 800 KPa.

7. The method according to claim 1, **characterized in that** the time interval during which the pressurized pneumatic fluid persists inside said chamber (5) is comprised between 10 and 20 seconds.

8. The method according to claim 4, **characterized in that** the temperature of the pressurized pneumatic fluid introduced in said chamber (5) is comprised between 20°C and 40°C.

9. The method according to claim 1, which consists in, during said step a), interposing also a second laminar element made of expanded material, said adhesive substance being interposed and distributed between said face (3) of said hull (4) and a first surface of the laminar element made of expanded material in contact with it and between the surface of the covering sheet (2) and the other surface of the laminar element made of expanded material in contact with it.

10. The method of claim 1, further comprising a step of interposition of further shock-absorbing layers between the covering sheet (12) and the hull (4).

11. The method according to claim 1, comprising providing said hull (4) made of a material chosen among metallic materials, composite materials, polymeric materials and wood.

12. The method according to claim 1, comprising providing said at least one covering sheet (2) made of a material chosen among hide, fabric, polymeric materials, rubber and natural fibers.

## Patentansprüche

1. Ein Verfahren zur Herstellung von Sätteln, das folgende Schritte umfasst:
a) Anbringen von mindestens einer Deckschicht (2) auf der oberen Fläche (3) einer Hülle (4), auch Schale genannt, eines Sattels (1), wobei zwischen der Fläche (3) und der Oberfläche der Schicht (2), die in Kontakt damit steht, eine haftende Substanz aufgetragen wird;
b) in einer hermetischen Kammer (5), bestehend aus einem hermetischen kastenartigen Körper (10), ausgestattet mit einer Öffnung, die mit Hilfe einer Zugangstür (8) hermetisch geschlossen werden kann, und ausgestattet mit einer elastisch verformbaren Membran (6), die stromabwärts von einer Düse (7) angeordnet ist zur Abgabe unter Druck gesetzten Pneumatik-Fluids, Anordnen der Hülle (4), überzogen von der Deckschicht (2), im Wesentlichen unterhalb der Membran (6) durch Einführen der Hülle (4), überzogen von der Deckschicht (2), durch die Öffnung in den kastenartigen Körper (10);
c) Schließen der Kammer (5) durch hermetisches Schließen der Zugangstür (8), wodurch sie von der äußeren Umgebung isoliert wird,
d) Einbringen des unter Druck gesetzten Pneumatik-Fluids, bis stromaufwärts von der Membran (6) ein Druck erreicht wird, der zwischen 0,1 und 20 bar, d. h. zwischen 10 KPa und 2 MPa, liegt;
e) Aufrechterhalten des in Schritt d) angegebenen Druckwertes innerhalb der Kammer (5) für einen Zeitraum zwischen 1 Sekunde und 10 Minuten;
f) Entfernen des unter Druck gesetzten Pneumatik-Fluids, Öffnen der Kammer (5) und Entfernen der Komponente, die aus der Hülle (4) besteht, die fest mit der Deckschicht (2) bedeckt ist;
g) Schneiden der Kanten der Schicht (2), die aus der Kontur der Hülle (4) herausragen, durch Entfernen derselben mit einem scharfen Werkzeug, wodurch der fertige Sattel (1) hergestellt ist.

2. Das Verfahren gemäß Anspruch 1, das in Schritt a) darin besteht, mindestens eine Oberfläche, gewählt aus der oberen Fläche (3) der Hülle (4) und der Oberfläche der Deckschicht (2), einer präventiven Behandlung zu unterziehen, wobei die präventive Behandlung die Platzierung eines Haftförderungsmittels, normalerweise Primer genannt, auf die mindestens eine Oberfläche, zur Erleichterung der korrekten und festen Haftung der haftenden Substanz, umfasst.

3. Das Verfahren gemäß Anspruch 1, **dadurch gekennzeichnet, dass** die haftende Substanz ein Polychloropren, eine Art von Polymeren, die auch als Neopren bekannt ist, ist.

4. Das Verfahren gemäß Anspruch 1, **dadurch gekennzeichnet, dass** das unter Druck gesetzte Pneumatik-Fluid, das in die Kammer (5) eingebracht ist, eine Temperatur zwischen 10°C und 100°C hat.

5. Das Verfahren gemäß Anspruch 1, das in Schritt g) darin besteht, die entsprechend geschnittene Deckschicht (2) mindestens einer Behandlung zwischen Färben und Besprühen mit wachsartigen Substanzen zu unterziehen.

6. Das Verfahren gemäß Anspruch 1, **dadurch gekennzeichnet, dass** der Druck des unter Druck gesetzten Pneumatik-Fluids, das in Schritt d) in die Kammer (5) eingebracht ist, vorzugsweise zwischen 2 und 8 bar, d. h. zwischen 200 KPa und 800 KPa, beträgt.

7. Das Verfahren gemäß Anspruch 1, **dadurch gekennzeichnet, dass** das Zeitintervall, während dessen das unter Druck gesetzte Pneumatik-Fluid innerhalb der Kammer (5) bleibt, zwischen 10 und 20 Sekunden beträgt.

8. Das Verfahren gemäß Anspruch 4, **dadurch gekennzeichnet, dass** die Temperatur des unter Druck gesetzten Pneumatik-Fluids, das in die Kammer (5) eingebracht wird, zwischen 20°C und 40°C beträgt.

9. Das Verfahren gemäß Anspruch 1, das darin besteht, dass in Schritt a) auch ein zweites laminares Element aus geschäumtem Material dazwischen angeordnet wird, wobei die haftende Substanz angeordnet und verteilt wird zwischen der Fläche (3) der Hülle (4) und einer ersten Oberfläche des laminaren Elements aus geschäumtem Material, das in Kontakt damit steht, und zwischen der Oberfläche der Deckschicht (2) und der anderen Oberfläche des laminaren Elements aus geschäumtem Material, das in Kontakt damit steht.

10. Das Verfahren gemäß Anspruch 1, das weiter einen Schritt des Anordnens weiterer stoßdämpfender Schichten zwischen der Deckschicht (12) und der Hülle (4) umfasst.

11. Das Verfahren gemäß Anspruch 1, das die Bereitstellung der Hülle (4) aus einem Material umfasst, das gewählt ist aus Metallmaterialien, Verbundmaterialien, Polymermaterialien und Holz.

12. Das Verfahren gemäß Anspruch 1, das die Bereitstellung der mindestens einen Deckschicht (2) aus einem Material umfasst, das gewählt ist aus Fell, Textilien, Polymermaterialien, Gummi und Naturfasern.

## Revendications

1. Procédé de fabrication de selles, comportant les étapes consistant à :
a) disposer au moins une feuille d'habillage (2) sur la face supérieure (3) d'une coque (4), également appelée carcasse, d'une selle (1), en intercalant une substance adhésive entre ladite face (3) et la surface de la feuille d'habillage (2) au contact de celle-ci ;
b) à l'intérieur d'une chambre hermétique (5) constituée par un corps hermétique (10) en forme de caisson muni d'une ouverture qui peut être hermétiquement fermée à l'aide d'une trappe d'accès (8), et munie d'une membrane (6) déformable par élasticité, disposée en aval d'une buse (7) servant à débiter un fluide pneumatique sous pression, disposer la coque (4), surmontée de ladite feuille d'habillage (2), sensiblement sous ladite membrane (6) en insérant la coque (4) surmontée de la feuille d'habillage (2) à travers ladite ouverture dans ledit corps (10) en forme de caisson ;
c) fermer la chambre (5) en fermant hermétiquement la trappe d'accès (8), qui isole celle-ci de l'environnement extérieur :
d) introduire le fluide pneumatique sous pression jusqu'à ce que soit atteinte, en amont de ladite membrane (6), une pression de 0,1 à 20 bar, c'est-à-dire de 10 KPa à 2 MPa ;
e) maintenir pendant une durée de 1 seconde à 10 minutes, à l'intérieur de la chambre (5), la valeur de pression indiquée lors de l'étape d) ;
f) évacuer le fluide pneumatique sous pression, ouvrir la chambre (5) et sortir la pièce constituée par la coque (4) couverte d'une manière stable par la feuille d'habillage (2) ;
g) rogner les bords de ladite feuille (2) qui dépassent du bord de ladite coque (4) en les coupant à l'aide d'un outil tranchant, et obtenir la selle finie (1).

2. Procédé selon la revendication 1, consistant, pendant ladite étape a), à soumettre à un traitement préventif au moins une surface choisie entre la face supérieure (3) de la coque (4) et la surface de la feuille d'habillage (2), ledit traitement préventif comprenant l'application d'un agent favorisant l'accrochage, généralement appelé apprêt, sur ladite au moins une surface, afin de faciliter l'adhérence appropriée et stable de ladite substance adhésive.

3. Procédé selon la revendication 1, **caractérisé en ce que** ladite substance adhésive est un polychloroprène, un type de polymères également appelé néoprène.

4. Procédé selon la revendication 1, **caractérisé en ce que** le fluide pneumatique sous pression introduit dans ladite chambre (5) a une température de 10°C à 100°C.

5. Procédé selon la revendication 1, consistant, pendant l'étape g), à soumettre la feuille d'habillage (2) convenablement rognée, à au moins un traitement parmi une coloration et une pulvérisation de substances cireuses.

6. Procédé selon la revendication 1, **caractérisé en ce que** la pression du fluide pneumatique sous pression introduit dans ladite chambre (5) pendant l'étape d) est de préférence de 2 à 8 bar, c'est-à-dire de 200 KPa à 800 KPa.

7. Procédé selon la revendication 1, **caractérisé en ce que** le laps de temps pendant lequel le fluide pneumatique sous pression reste à l'intérieur de ladite chambre (5) est de 10 à 20 secondes.

8. Procédé selon la revendication 4, **caractérisé en ce que** la température du fluide pneumatique sous pression introduit dans ladite chambre (5) est de 20°C à 40°C.

9. Procédé selon la revendication 1, consistant, pendant ladite étape a), à intercaler également un second élément en feuille en matière expansée, ladite substance adhésive étant intercalée et répartie entre ladite face (3) de ladite coque (4) et une première surface de l'élément en feuille en matière expansée au contact de celle-ci et entre la surface de la feuille d'habillage (2) et l'autre surface de l'élément en feuille en matière expansée au contact de celle-ci.

10. Procédé selon la revendication 1, comportant en outre une étape consistant à intercaler d'autres couches d'amortissement de chocs entre la feuille d'habillage (2) et la coque (4).

11. Procédé selon la revendication 1, comportant la réalisation de ladite coque (4) en une matière choisie parmi les matières métalliques, les matériaux composites, les polymères et le bois.

12. Procédé selon la revendication 1, comportant la réalisation de ladite au moins une feuille d'habillage (2) en une matière choisie parmi la peau, le tissu, les polymères, le caoutchouc et les fibres naturelles.
